# EUROPEAN PATENT SPECIFICATION

(11) **EP 0 819 626 B1**
(45) Date of publication and mention of the grant of the patent: **08.10.2003**
(21) Application number: 97111922.7
(22) Date of filing: 14.07.1997
(51) Int. Cl.: B65G 47/14, B65G 65/38

(54) **Variable loading-volume silo for storing unbreakable products**
Silo zum Lagern von variablen Mengen von bruchfesten Produkten
Silo de stockage à chargement de volumes variables pour produits incassables

(30) Priority: 19.07.1996 IT MI961518
(43) Date of publication of application: 21.01.1998
(73) Proprietor: Muscopack sas di Musco Ezio Piero Mario, 24016 San Pellegrino Terme (Bergamo) (IT)
(72) Inventor: Musco,Ezio Piero Mario c/o MUSCOPACK SAS, 24016 S. Pellegrino Terme (BG) (IT)
(74) Representative: Cicogna, Franco

(56) References cited:
- DE-U- 8 416 394
- FR-A- 2 727 096
- US-A- 5 176 299

## Description

### BACKGROUND OF THE INVENTION

The present invention relates to a variable loading-volume silo, which has been specifically designed for storing herein unbreakable products.

As is known, in a lot of industrial applications are used serie-operating machines which have different operating speeds.

Thus, it is necessary to interpose, between two serie-arranged machines, suitably designed storing silos, adapted to operate as storage units, in order to allow a continuous production method to be carried out, notwithstanding the different operating speeds of the two machines.

Prior storing silos used for the above mentioned applications usually present the drawback that the loading or useful volume thereof can not be modified, in order to fit the amount of products introduced into said silos.

Thus, further problems are generated, mainly relating the falling height of the products inside said silos: i.e. said falling height can be excessive as the silo is in a fully empty condition and, consequently, the falling products can be damaged, and, moreover, the already stored products can be difficultly unloaded.

The document DE-U-84 16 394 discloses a variable loading volume silo substantially according to the preamble of claim 1.

### SUMMARY OF THE INVENTION

Accordingly, the aim of the present invention is to overcome the above mentioned problems, by providing such a silo the loading-volume of which can be automatically changed depending on the amount of the products introduced into said silo.

Within the scope of the above mentioned aim, a main object of the present invention is to provide such a variable loading-volume silo which allows to hold constant, and at a minimum value, the product falling height inside said silo, so as to prevent the products from being damaged.

Another object of the present invention is to provide such a silo from which the stored products can be unloaded in a very simple and reliable manner.

Another object of the present invention is to provide such a silo which is operatively very simple.

Yet another object of the present invention is to provide such a silo which, owing to its specifically designed constructional features, is very reliable and safe in operation.

According to one aspect of the present invention, the above mentioned aim and objects, as well as yet other objects, which will become more apparent hereinafter, are achieved by a variable loading-volume silo according to claim 1.

### BRIEF DESCRIPTION OF THE DRAWINGS

Further characteristics and advantages of the variable loading-volume silo according to the present invention will become more apparent hereinafter from the following detailed disclosure of two preferred, though not exclusive, embodiments of said silo, which are illustrated, by way of a merely indicative, but not limitative, example in the accompanying drawings, where:
Figures 1 to 4 are schematic views illustrating the silo according to the present invention, in a first embodiment thereof, under different operating conditions; and
Figures 5 to 8 are further schematic views illustrating a second embodiment of the silo according to the present invention, in several operating conditions thereof.

### DESCRIPTION OF THE PREFERRED EMBODIMENTS

With reference to the number references of the above mentioned figures, the variable loading-volume silo according to the present invention, which has been generally indicated by the reference number 1, comprises a box-like construction 2 which, on the top portion thereof, is provided with an inlet opening or port 3 for introducing into said silo the products 8 to be stored therein.

Inside said box-like construction 2, under said product inlet opening or port 3 a flexible belt element 4 is arranged, said flexible belt element being entrained on two horizontal parallel axis rollers 5, 6, and being arranged between two side walls, of which a single side wall has been illustrated in the figures and indicated by the reference number 7.

The side containment walls 7 are advantageously provided with an inner smooth side or surface so as not to interfere against the movement of the products 8 introduced into said silo.

At least one of said two rollers 5 and 6 can be rotatively driven about its respective rotary axis, either in a direction or in an opposite direction, in order to either wind or unwind the flexible belt element 4 so as to change the length of said flexible belt element 4 between said two rollers 5 and 6, to correspondingly change the loading or useful volume of the silo, as it will be more apparent hereinafter.

As required, the two entrainment rollers 5 and 6 can be driven by any type of known means not specifically shown, by a rotary movement about the rotary axes thereof, in order to either wind or unwind said flexible belt element 4, from the two longitudinal end portions thereof coupled to said rollers 5 and 6.

More specifically, the flexible belt element 4 is preferably made of a cloth material and it can also be provided with reinforcement elements, extending transversely of the longitudinal extension of said belt between said rollers 5 and 6, so as to provide a desired mechanical strength, without preventing a proper winding of said flexible belt element 4 about said rollers 5 and 6.

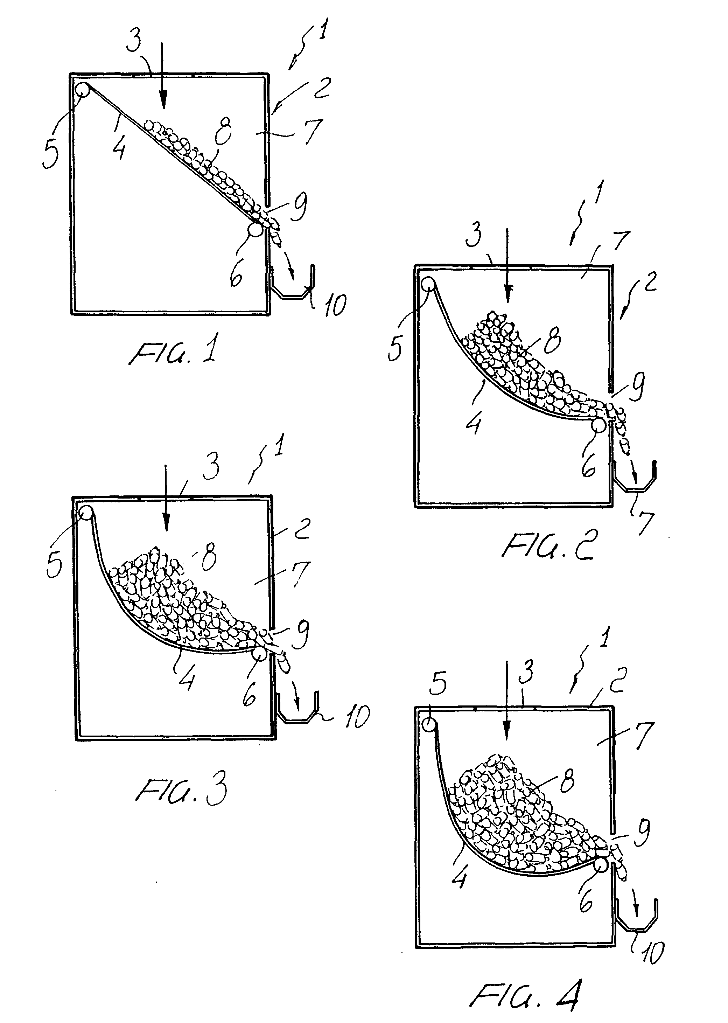

In the embodiment of the invention shown in figures 1 to 4, the roller 5 is arranged on the top of the roller 6, near the top wall of the box-like construction 2.

The bottom roller 6, on the other hand, is arranged near, i.e. immediately under, an unloading opening or port 9, for unloading or removing the products 8 stored in said silo.

At the bottom of said outlet opening 9, in particular, a containing vessel 10 or other suitable means for collecting the products 8 unloaded from said silo 1 can be arranged.

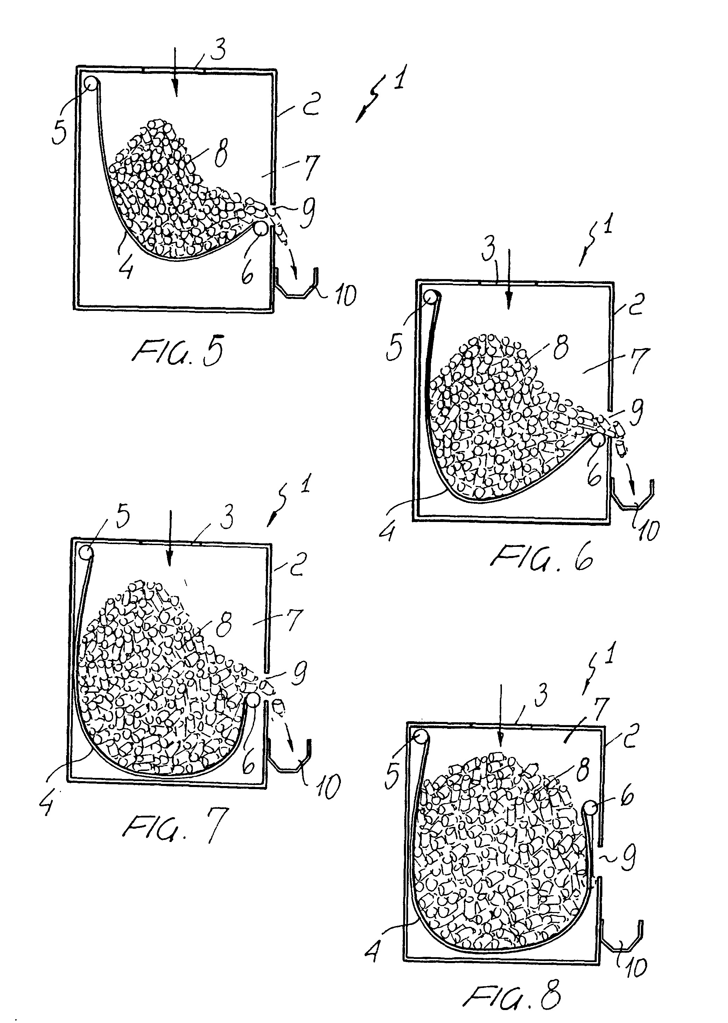

In the embodiment of the invention shown in figures 5 to 8, the roller 5 is still arranged near the top wall of the box-like construction 2, whereas the roller 6 is supported, in a vertically movable manner, by said box-like construction 2.

Driving means are moreover provided, of any known suitable types, and not shown for simplicity, for driving vertically said roller 6 in order to change the height level thereof.

In this embodiment too, through the wall of the box-like construction 2, near which said roller 6 is driven, an unloading opening or port 9 is defined.

In particular, the roller 6 can be brought to the level of the bottom edge of said opening 9, in order to allow the stored products to be easily unloaded.

The driving of the rollers 5 and 6 can be automatically controlled by an electronic control device which will be designed also depending on the apparatus arranged upstream and downstream of the silo.

The variable loading-volume silo according the present invention operates as follows.

As the products 8 stored inside said silo must be unloaded, then, by operating either one of the rollers 5 and 6, or both said rollers 5 and 6, the flexible belt element 4 is wound on said rollers and so tensioned as to define a slanted plane ending near the unloading opening or port 9, therethrough the stored products 8 will be unloaded from the silo.

As, on the contrary, the products 8 introduced into said silo must be progressively stored, then either one or the other of or both the rollers 5 and 6 are so driven as to progressively unwind the flexible belt element 4, thereby increasing the useful volume of the silo.

In the second embodiment of the invention, moreover, the loading capability of the silo can be increased to a maximum by raising the bottom roller 6 to the top portion of the outlet opening 9.

In this connection it should be apparent that, since it is possible to progressively increase the useful or loading-volume of the silo by progressively unwinding said flexible belt element 4, the falling height of the product 8 inside said silo can be held substantially constant and very small thereby preventing the products being introduced into the silo from being damaged.

If products 8 stored in said silo must be unloaded, then, as stated, the flexible belt element 4 will be progressively tensioned, by possibly lowering the roller 6 to the bottom edge of the outlet opening 9.

From the above disclosure and the observations of the figures of the accompanying drawings, it should be apparent that the invention fully achieves the intended aim and objects.

In particular, the fact is to be pointed out that a silo has been provided which, owing to the possibility of easily changing its loading or useful volume, will meet all of the production requirements, while safely preventing the products from being damaged.

While the variable loading-volume silos has been shown and illustrated with reference to preferred embodiments thereof, it should be apparent that the disclosed embodiments are susceptible o several modifications and variations all of which will come within the scope of the appended claims.

In practicing the invention, the used materials, as well as their size and shapes, can be any, depending on requirements.

## Claims

1. A variable loading-volume silo (1), for storing therein unbreakable products, said silo comprising a box-like construction (2) having an inlet (3) for theproducts to be stored and housing, under said inlet (3), a flexible belt element (4) entrained between two horizontal-parallel axis rollers (5, 6), and being arranged between two substantially vertical side walls (7) of said box-like construction (2); at least one of said two rollers (5, 6) being rotatively driven about a rotary axis thereof, either in a direction or in an opposite direction, to wind and unwind said flexible belt element (4) so as to change the length of said flexible belt element (4) and accordingly said loading-volume of said silo (1), one (6) of said rollers (5, 6) being arranged at a lower level than that of said other roller (6), said box-like construction being provided, near said bottom roller (6), with a stored product unloading opening (9), **characterized in that** at least one of said two rollers (5, 6) is movable in the height direction thereof, from a raised position to a lowered position at which it will be arranged near said product unloading opening (9).

2. A silo (1), according to Claim 1, **characterized in that** both said two rollers (5, 6) are rotatively driven about their rotary axes, to wind or unwind said flexible belt element (4).

3. A silo (1), according to claim 1, **characterized in that** said flexible belt element (4) comprises a cloth material.

4. A silo (1), according to Claims 1 and 2, **characterized in that** said flexible belt element (4) comprises reinforcement elements extending transversely of the longitudinal extension of said flexible belt element (4).

## Patentansprüche

1. Silo (1) mit variabler Lagerungsmenge zur Lagerung bruchfester Produkte in demselben, wobei das Silo eine kastenförmige Konstruktion (2) mit einem Einlass (3) für die zu lagernden Produkte und unter dem Einlass (3) ein zwischen zwei Rollen (5,6) mit horizontal-paralleler Achse angetriebenes flexibles Bandelement (4) aufweist, wobei dieselben zwischen zwei im Wesentlichen vertikalen Seitenwänden (7) der kastenförmigen Konstruktion (2) angeordnet sind; wobei mindestens eine der zwei Rollen (5,6) um eine Drehachse derselben entweder in einer Richtung oder in einer entgegengesetzten Richtung drehbar angetrieben wird, um das flexible Bandelement (4) aufzuwickeln und abzuwickeln, um die Länge des flexiblen Bandelementes (4) und dementsprechend die Lagerungsmenge des Silos (1) zu verändern, wobei eine (6) der Rollen (5,6) auf einer niedrigeren Ebene als die andere Rolle (5) angeordnet, und wobei die kastenförmige Konstruktion in der Nähe der unteren Rolle mit einer Entladeöffnung (9) für das gelagerte Produkt versehen ist,
**dadurch gekennzeichnet, dass**
mindestens eine der zwei Rollen (5,6) in Richtung der Höhe derselben von einer angehobenen Position in eine abgesenkte Position bewegbar ist, in welcher sie in der Nähe der Produktentladeöffnung (9) angeordnet ist.

2. Silo (1) nach Anspruch 1,
**dadurch gekennzeichnet, dass**
die zwei Rollen (5,6) beide um ihre Drehachse drehbar angetrieben werden, um das flexible Bandelement (4) aufzuwickeln oder abzuwickeln.

3. Silo (1) nach Anspruch 1,
**dadurch gekennzeichnet, dass**
das flexible Bandelement (4) ein Stoffmaterial umfasst.

4. Silo (1) nach den Ansprüchen 1 und 2,
**dadurch gekennzeichnet, dass**
das flexible Bandelement (4) sich quer zu der Längsausdehnung des flexiblen Bandelementes (4) erstreckende Verstärkungselemente aufweist.

## Revendications

1. Silo (1) présentant un volume de charge variable, pour stocker des produits incassables, ledit silo comprenant une construction (2) en forme de boîte présentant une entrée (3) pour les produits à stocker et à loger, en dessous de ladite entrée (3), un élément flexible de type courroie (4) entraînée entre deux cylindres d'axes horizontaux et parallèles (5, 6), et étant disposé entre deux parois verticales de côtés (7) de ladite construction en forme de boîte (2) ; au moins un des deux cylindres (5, 6) étant actionné de manière rotative autour d'un axe de rotation de celui-ci ; aussi bien dans une direction que dans une direction opposée, pour enrouler et dérouler ledit élément flexible de type courroie (4) afin de modifier la longueur dudit élément flexible de type courroie (4) et de ce fait ledit volume de charge dudit silo (1), un (6) desdits cylindres (5, 6) étant disposé à un niveau plus bas que ledit autre cylindre (5), ladite construction en forme de boîte étant munie, prés dudit cylindre inférieur (6), d'une ouverture (9) de déchargement du produit stocké, **caractérisé en ce qu'**au moins un des deux cylindres (5, 6) est mobile en hauteur, à partir d'une position haute vers une position basse à laquelle il sera disposé près de ladite ouverture (9) de déchargement du produit.

2. Silo (1), selon la revendication 1, **caractérisé en ce que** lesdits deux cylindres (5, 6) sont actionnés de manière rotative autour de leurs axes rotatifs, pour enrouler ou dérouler ledit élément flexible de type courroie (4).

3. Silo (1), selon la revendication 1, **caractérisé en ce que** ledit élément flexible de type courroie (4) comprend un matériau textile.

4. Silo (1), selon les revendications 1 et 2, **caractérisé en ce que** ledit élément flexible de type courroie (4) comprend des éléments de renforts s'étendant à la transversale de l'extension longitudinale dudit élément flexible de type courroie (4).
